(19) Europäisches Patentamt
European Patent Office
Office européen des brevets

(11) Publication number: **0 509 395 B1**

(12) **EUROPEAN PATENT SPECIFICATION**

(45) Date of publication of patent specification: **05.10.94**

(51) Int. Cl.[5]: **C08L 23/16**, C08K 5/32, C08K 3/04, C08F 8/30

(21) Application number: **92106155.2**

(22) Date of filing: **09.04.92**

(54) **Process for producing rubber compositions.**

(30) Priority: **19.04.91 JP 88216/91**

(43) Date of publication of application:
**21.10.92 Bulletin 92/43**

(45) Publication of the grant of the patent:
**05.10.94 Bulletin 94/40**

(84) Designated Contracting States:
**DE ES FR GB IT NL**

(56) References cited:
**EP-A- 0 253 365**
**EP-A- 0 332 052**
**EP-A- 0 451 539**

**WORLD PATENTS INDEX LATEST Week 9139, Derwent Publications Ltd., London, GB; AN 91284793 & JP-A-3 188 143**

(73) Proprietor: **SUMITOMO CHEMICAL COMPANY, LIMITED**
**5-33, Kitahama 4-chome**
**Chuo-ku**
**Osaka (JP)**

(72) Inventor: **Aoshima, Masashi**
**16-28, Higashioda-2-chome**
**Ibaraki-shi (JP)**
Inventor: **Sato, Mitsuhiko**
**9-1-303, Tamagawa-1-chome**
**Takatsuki-shi (JP)**

(74) Representative: **VOSSIUS & PARTNER**
**Postfach 86 07 67**
**D-81634 München (DE)**

**EP 0 509 395 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for producing an ethylene-α-olefin copolymer rubber composition, more particularly, to a process for producing an ethylene-α-olefin copolymer rubber composition which is excellent in heat resistance and durability. The rubber composition obtained by the process of this invention is suitably used in hoses, belts and rubber vibration insulators for automobiles and industrial products in which both durability and heat resistance are required.

Heretofore, in the areas of automobile and industrial products, an ethylene-α-olefin-non-conjugated diene terpolymer rubber has been widely used because of its excellent performance. Recently, however, particularly in the area of automobiles, the performance of engines has been enhanced,whereby an improvement of heat resistance of rubber has been more strongly desired, and hence, the use of an ethylene-α-olefin copolymer rubber is desired, which is superior in heat resistance to an ethylene-α-olefin-non-conjugated diene terpolymer rubber.

However, an ethylene-α-olefin copolymer rubber is inferior in reinforceability depending on the cross linking type, and thereby, has defects that it is inferior in durability against external force repeatedly applied for a long period of time and deformation under a high load. Hence, ethylene-α-olefin copolymer rubbers have not been able to be used under severe external force and deformation conditions.

Rubber compositions are disclosed in EP-A-253 365 which incorporate in a filler-containing natural rubber or synthetic rubber certain dinitrodiamine derivatives of the formula $A(N(R'')-CH_2-C(R)(R')NO_2)_2$. It is disclosed that the rubbers that may be used include synthetic rubbers such as ethylene-propylene-diene copolymer rubber. Fillers, processing oil, stearic acid and the like are compounded in the first step at a relatively high rubber temperature of about 120-170 °C and a vulcanization accelerator and a vulcanizing agent are compounded in the second step at a relatively low rubber temperature of about 30-120 °C. These rubber compositions are disclosed as useful for treads and other parts of tires and as anti-vibration rubbers for industrial products. Scorch property and flex-cracking resistance are stated to be improved as compared to the case of a compound according to the conventional technique.

It is the object of the present invention to provide a rubber composition which is excellent in heat resistacnce and even durability against repetitive deformation. This object could be solved on the basis of the finding that a rubber composition produced through specific steps achieves the purpose.

According to the present invention, there is provided a process for producing a rubber composition comprising the first step of heat-treating at 120 °C or more a mixture comprising 100 parts by weight of an ethylene-α-olefin copolymer rubber, 0.5-5 parts by weight of at least one dinitrodiamine represented by general formula (1):

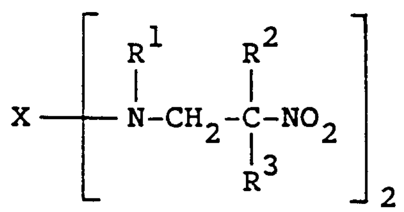

(1)

wherein X is a divalent, acyclic aliphatic group, a divalent, cyclic aliphatic group or a divalent aryl group which may contain halogen(s) or oxygen; $R^1$ is a hydrogen atom, an acyclic aliphatic group, a cyclic aliphatic group or an aryl group and when both X and $R^1$ are acyclic aliphatic groups, the nitrogen atoms may be linked to each other through $R^1$; $R^2$ and $R^3$ are independently hydrogen atoms or alkyl groups of 1-12 carbon atoms and $R^2$ and $R^3$ may be combined to form a ring, and at least one radical generating agent, to obtain a heat-treated mixture, the second step of adding a filler to the heat-treated mixture and kneading them to obtain a rubber mixture and the third step of compounding a crosslinking agent with the rubber mixture obtained in the second step at 100 °C or less to obtain a rubber composition.

According to the process of this invention, an ethylene-α-olefin copolymer rubber composition which is excellent in heat resistance and also durability can be obtained.

The process of this invention includes three steps consisting of the above-mentioned first to third steps as the essential steps.

The first step is a step in which a mixture comprising 100 parts by weight of an ethylene-α-olefin copolymer rubber, 0.5-5 parts by weight of at least one dinitrodiamine and at least one radical generating

agent is heat-treated at 120 °C or more to obtain a heat-treated compound.

The α-olefin which is one of the constituents of the ethylene-α-olefin copolymer rubber used in the first step includes e.g. propylene, 1-butene and 1-hexene.

The dinitrodiamine represented by general formula (1) used in this invention includes specifically compounds represented by the following formulas wherein -Z denotes

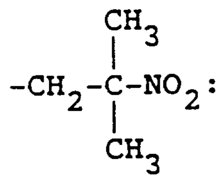

(1) $Z-NH-(CH_2)_2-NH-Z$

(2) $Z-NH-(CH_2)_3-NH-Z$

(3) $Z-NH-(CH_2)_4-NH-Z$

(4) $Z-NH-(CH_2)_6-NH-Z$

(5) $Z-NH-(CH_2)_{10}-NH-Z$

(6) $Z-NH-(CH_2)_{12}-NH-Z$

(7) 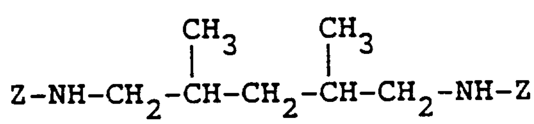

(8) $NO_2-(CH_2)_2-NH-(CH_2)_2-NH-(CH_2)_2-NO_2$

(9) $NO_2-(CH_2)_2-NH-(CH_2)_6-NH-(CH_2)_2-NO_2$

(10) 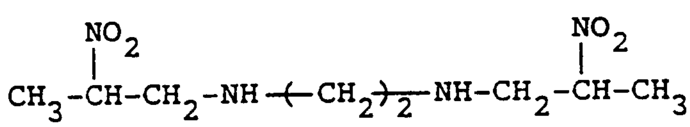

(11) 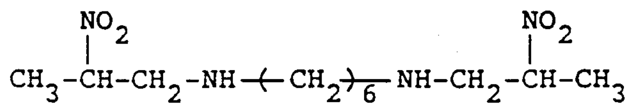

(12) 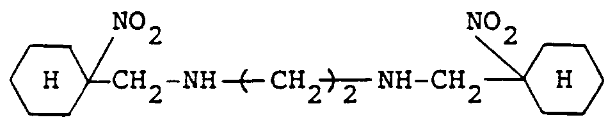

(13) 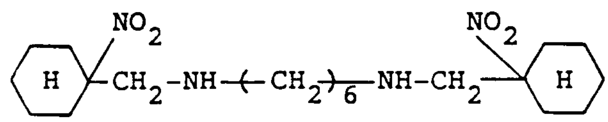

(14) 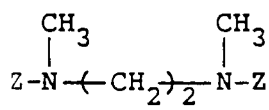

(15) 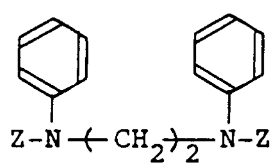

(16) 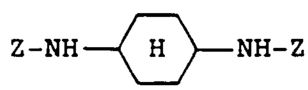

(17) 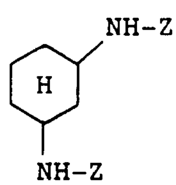

(18) 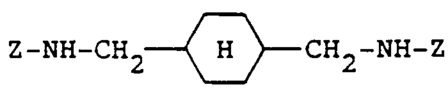

(19) 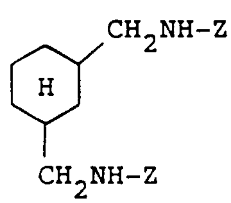

(20) 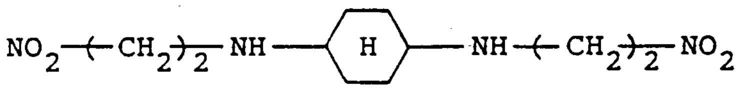

(21) 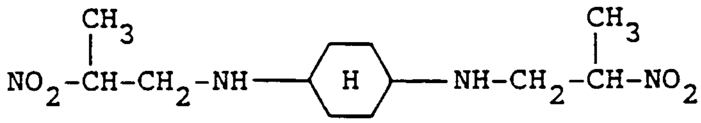

(22) 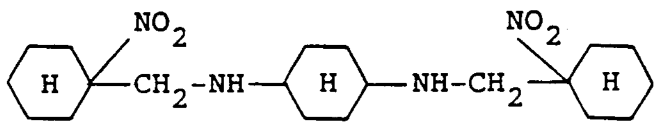

(23) 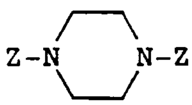

(24) 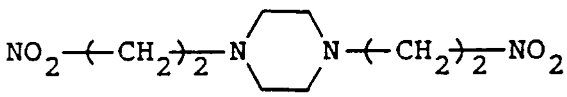

(25) 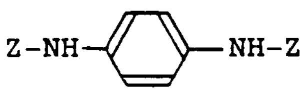

(26) 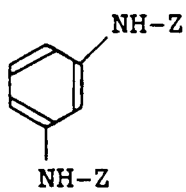

(27) 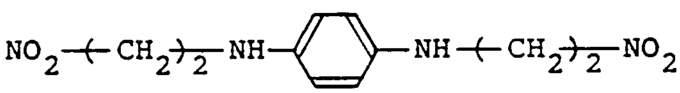

(28) 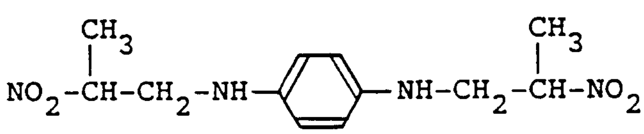

(29) 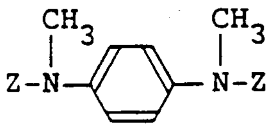

(30) 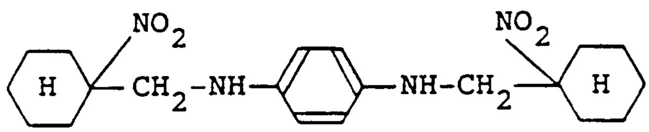

(31) 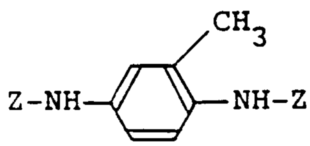

(32) 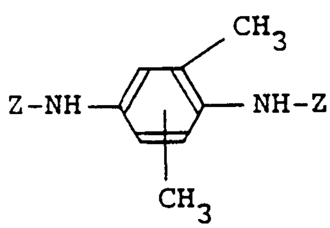

(33) 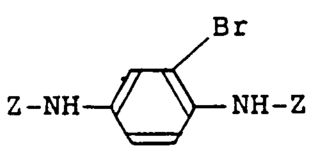

(34) 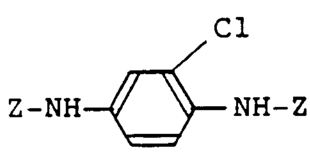

(35) 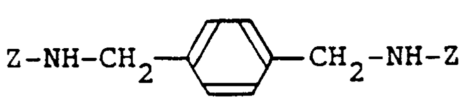

(36) 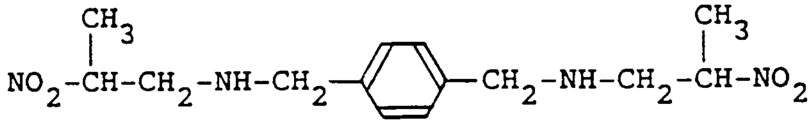

(37) 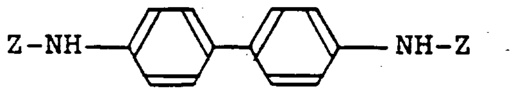

(38) 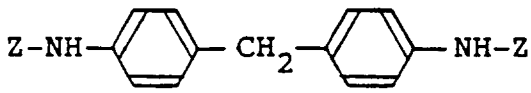

(39) 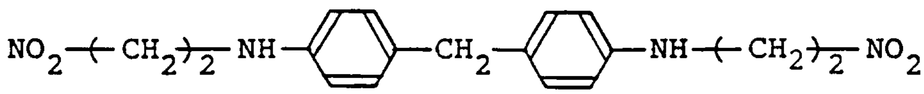

(40) 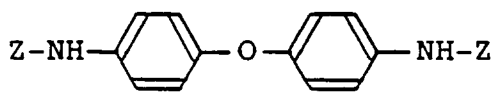

(41) 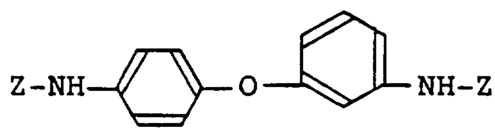

(42) 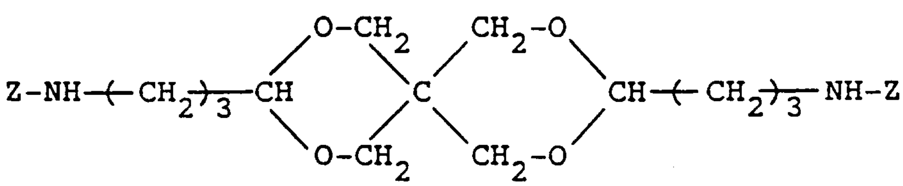

(43) 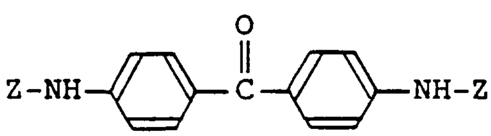

(44) 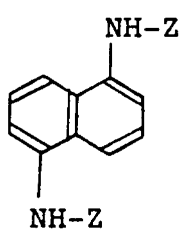

(45) 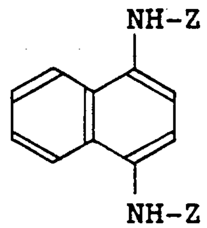

(46) 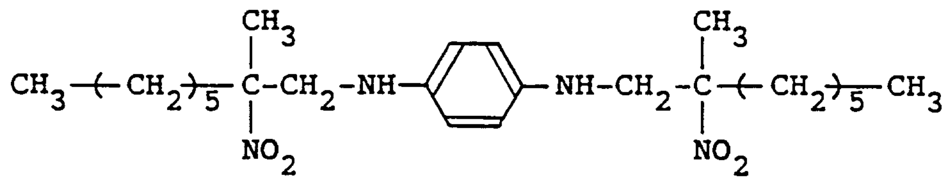

(47) 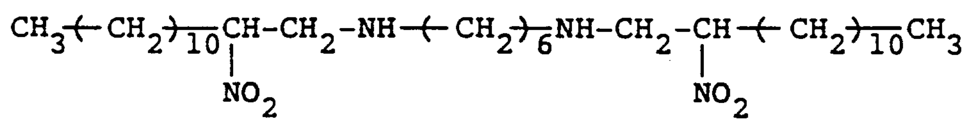

and

(48) 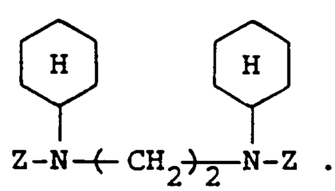 .

As described before, X in general formula (1) is a divalent acyclic aliphatic group, a divalent cyclic aliphatic group or a divalent aryl group, and can contain a halogen in the group as in (33) and (34) and oxygen in the group as in (40)-(43). Among these, the compound in which X is an acyclic aliphatic group, especially an acyclic aliphatic group having 4-12 carbon atoms, or a phenylene group is suitably used.

$R^1$ in general formula (1) is a hydrogen atom, an acyclic aliphatic group, a cyclic aliphatic group or an aryl group. When both X and $R^1$ are acyclic aliphatic groups, the two nitrogen atoms may be linked to each other through $R^1$ to form a ring together with X, as in (23) and (24).

Further, $R^2$ and $R^3$ in general formula (1) may be the same or different and are independently hydrogen atoms or alkyl groups having 1-12 carbon atoms. Incidentally, as in (12), (13), (22) and (30), $R^2$ and $R^3$ may be linked to form a ring together with the carbon atom to which $R^2$ and $R^3$ are attached.

The dinitrodiamine may be used alone or in combination of two or more. The amount of the dinitrodiamine used is 0.5-5 parts by weight per 100 parts by weight of the ethylene-α-olefin copolymer rubber. When a smaller amount of dinitrodiamine than this range is used, the improvement effect on durability is insufficient and when a larger amount of dinitrodiamine than this range is used, the improvement effect on durability is not raised, and hence, the use of the dinitrodiamine in such an amount is uneconomical.

In the first step, it is necessary that at least one radical generating agent co-exists.

The radical generating agent used includes 2,2'-dithiobisbenzothiazole and organic peroxides. The organic peroxide may be any one and includes diacylperoxides, dialkylarylperoxides, peroxyesters, and peroxyketals, and these can be used alone or in combination of two or more. Specific examples thereof include benzoylperoxide, 1,1-di-t-butylperoxy-3,3,5-trimethylcyclohexane, di-t-butylperoxydiisopropylbenzene, dicumylperoxide, and 2,5-dimethyl-2,5-di-(t-butyl-peroxy) hexane.

The amount of the above radical generating agent used is not critical, and preferably 0.1-3 parts by weight per 100 parts by weight of the ethylene-α-olefin copolymer rubber. Further, a polyfunctional monomer such as methaphenylene bismaleimide, quinone dioxime, triallyl isocyanurate, diallyl phthalate, or ethylene glycol dimethacrylate can be, if necessary, used together with the radical generating agent.

Moreover, in the first step, a filler may also be added in an amount of 30 parts by weight or less per 100 parts by weight of the ethylene-α-olefin copolymer rubber. When a larger amount of the filler than this range is used, the rubber composition obtained finally is unsatisfactory in durability.

The filler used includes carbon black, silica, talc, calcium carbonate, and clay have been conventionally used in the rubber industry, and carbon black is preferable in view of durability. The carbon black includes, for example, HAF black, FEF black, and SRF black, and these can be used regardless of the degree of the carbon black reinforceability.

In the first step, it is necessary to heat at a high temperature of 120°C or more the mixture comprising an ethylene-α-olefin copolymer rubber, a dinitrodiamine and a radical generating agent, and if necessary a filler. In this case, higher temperatures are preferable in respect of improving durability; however, when the temperature is too high, the ethylene-α-olefin copolymer rubber undergoes oxidative deterioration, so that it is preferable that the heat treatment is completed at a temperature of from 120°C to 220°C in 1-40 minutes.

The heat treatment in the first step is specifically conducted by mixing said mixture at 120°C or more, or first mixing said mixture about room temperature and then heating it at 120°C or more using an oven. For said mixing, for example, an open roll, an internal mixer, or an extruder can be used.

Incidentally, the addition of a dinitrodiamine can be conducted by dissolving the dinitrodiamine in an organic solvent such as hexane adding the resulting solution to the ethylene-α-olefin copolymer rubber to allow the solution to permeate the rubber and removing the organic solvent by evaporation.

The second step is a step of adding a filler to the heat-treated mixture obtained in the first step and kneading them to obtain a rubber mixture.

Examples of the filler used in the second step are the same as those mentioned as to the first step and carbon black is the most preferable. Further, the filler used in the second step may be the same as or different from that used in the first step. The amount of the filler used in the second step is adjusted so that the total amount of the filler used in the first step and the filler used in the second step falls within the conventionally used weight ratio to rubber component in the rubber industry. That is to say, the total amount is usually about 30-150 parts by weight per 100 parts by weight of rubber component.

The kneading in the second step is conducted using the common apparatus under the common conditions in the rubber industry and is not critical.

Further, in the second step, compounding ingredients such as processing oil, zinc oxide, stearic acid and processing aid may be added.

The third step of this invention is a step of compounding a known crosslinking agent conventionally used in the rubber industry for cross linking ethylene-α-olefin copolymer rubbers, for example the above-mentioned organic peroxide and, if necessary, a crosslinking coagent with the rubber mixture obtained in the second step, to obtain a rubber composition.

In the third step, it is necessary to knead the rubber mixture and the cross linking agent at 100°C or less so as not to initiate the reaction of the crosslinking agent to be compounded.

The rubber composition obtained in the third step can be vulcanized using vulcanizing apparatus which has been conventionally used in the rubber industry, such as a hot press or an injection molding machine.

This invention is specifically explained below referring to Examples. The Examples are not by way of limitation but by way of illustration.

Examples 1-5 and Comparative Examples 1-3

The starting materials were mixed and heat-treated using a 1.5-liter Banbury mixer under the first step conditions shown in Table 1 to obtain a heat-treated mixture. Thereafter, to the heat-treated mixture obtained were added 70 parts by weight of FEF black, 10 parts by weight of paraffinic processing oil (DIANA PW 380 manufactured by IDEMITSU KOSAN CO., LTD.), 5 parts by weight of zinc oxide, 1 part by weight of stearic acid and 5 parts by weight of an antioxidant (SUMILIZER MB and ANTIGENE RD manufactured by SUMITOMO CHEMICAL CO., LTD.) and they were kneaded by means of a Banbury mixer at the starting temperature of 80°C for 4 minutes, to obtain a rubber mixture (the second step). Incidentally, the term "part by weight" means the value per 100 parts by weight of rubber component used initially (the same applies hereinafter).

In the third step, the rubber mixture obtained was cooled to room temperature, after which 2.7 parts by weight of dicumylperoxide (pure product) as a crosslinking agent and 2.0 parts by weight of ethylene glycol dimethacrylate as a crosslinking coagent were added to the rubber mixture and they were kneaded using an open roll at 40-70 °C to obtain a rubber composition. The viscosity of the rubber composition compound obtained through the above steps was measured according to the JIS K6300 method. Further, said compound was treated using a hot press at 160 °C for 30 minutes to form a vulcanised sheet having a thickness of 2 mm. Moreover, a right cylinder having a diameter of 24 mm and a thickness of 25 mm as a sample for fatigue test and a right cylinder having a diameter of 29 mm and a thickness of 12.7 mm as a sample for compression set test were molded in a vulcanizing mold. Tensile test, tear test, compression set test and heat aging test were conducted according to JIS K 6301. The conditions for each test are as shown below.

[Fatigue Test]

Extension and compression were repeated using a rubber vibration insulator fatigue tester manufactured by ITO SEIKI according to SRIS-3502 at a distortion factor of ±35% (±8.75 mm) and at a cycle of 300 cpm, and the number of replications until fatigue failure was measured.

[Compression Set Test]

Compression set after 70 hours at a test temperature of 150 °C was determined using a Geer oven according to JIS K 6301.

[Air Oven Aging Test]

The tensile strength after 200 hours at a test temperature of 150 °C and the elongation at break were measured using a Geer oven according to JIS K 6301 to determine the degree of change each of tensile strength and elongation at break.

The above test results are shown in Table 1.

Examples 6-8 and Comparative Example 4

The starting materials were mixed and heat-treated in a 1.5-liter Banbury mixer to obtain a heat-treated mixture under the first step conditions shown as in Table 2. Thereafter, to the heat-treated mixture obtained were added FEF black in the amount (parts by weight) shown in Table 2, 15 parts by weight of paraffinic processing oil (DIANA PW 380 manufactured by IDEMITSU KOSAN CO., LTD.), 5 parts by weight of zinc oxide, 1 part by weight of stearic acid and 5 parts by weight of an antioxidant (SUMILIZER MB and ANTIGENE RD manufactured by SUMITOMO CHEMICAL CO., LTD.) were added and they were kneaded in a Banbury mixer at a starting temperature of 80 °C for 4 minutes (the second step).

Thereafter, in the third step, 2.7 parts by weight of dicumylperoxide (pure product) as a crosslinking agent and 2.0 parts by weight of ethylene glycol dimethacrylate as a crosslinking coagent were added to the rubber mixture obtained in the second step, and they were kneaded on an open roll at 40-70 °C to obtain a compound. The subsequent operation and evaluation were conducted in the same manner as in Example 1. The results are shown in Table 2.

Comparative Examples 5 and 6

Kneading was conducted only in the second step without conducting the heat-treatment in the first step. The compounding recipe and kneading conditions were the same as in the second and third steps of Examples 6-8. The results are shown in Table 2.

Comparative Example 7

For comparing ethylene-α-olefin-non-conjugated diene terpolymer rubber with the Examples, the ethylene-propylene-ethylidene norbornene copolymer rubber, zinc oxide, stearic acid, EFE black, processing oil and ANTIGENE NBC shown in Table 3 were kneaded by means of a BR type Banbury mixer (internal volume: 1.5 liters) at a starting temperature of 80 °C for 4 minutes.

Subsequently, the residual vulcanizing agent and vulcanizing accelerator shown in Table 3 were added to the resulting mixture and were kneaded using an open roll at 40-70 °C to obtain a compound. The subsequent operation and evaluation were conducted in the same manner as in Example 1, provided that the heat resistance was evaluated by measuring a change of physical properties after heating at 150 °C for 70 hours. The results were shown in Table 4.

Table 1

| | | | | Example | | | | |
|---|---|---|---|---|---|---|---|---|
| | | | | 1 | 2 | 3 | 4 | 5 |
| First step | EPM (1) (part by weight) | | | 100 | 100 | 100 | 100 | 100 |
| | Com-pounding recipe | Dinitro-diamine | Kind (2) | A | A | A | B | C |
| | | | Part by weight | 1 | 3 | 3 | 3 | 3 |
| | | Radical generat-ing agent | Kind (3) | X | X | Y | X | X |
| | | | Part by weight | 0.2 | 0.2 | 0.5 | 0.2 | 0.2 |
| | Heat treatment conditions | Temperature (°C) | | 140 - 150 | 140 - 150 | 160 - 170 | 140 - 150 | 140 - 150 |
| | | Time (minute) | | 2 | 1 | 1 | 1 | 1 |
| | Compound viscosity ($ML_{1+4}$ 100°C) | | | 71 | 72 | 72 | 73 | 74 |
| | | Tensile strength $T_B$ ($Kgf/cm^2$) | | 124 | 132 | 135 | 129 | 127 |
| | | Elongation at break $E_B$ (%) | | 380 | 380 | 400 | 370 | 360 |

- cont'd -

Table 1 (cont'd)

| | | | | | | | | |
|---|---|---|---|---|---|---|---|---|
| Result of evaluation | Properties of vulcanizate | Tear strength $Tr_B$ (Kgf/cm) | | 39 | 40 | 39 | 40 | 39 |
| | | Durability (Number of replications of extension and compression until fatigue failure) ±35% (x 10,000) | | 128 | 142 | 118 | 124 | 135 |
| | | Heat resistance 150°C | Compression set (%) | 45 | 45 | 47 | 45 | 44 |
| | | | $T_B$ change (%)(4) | ±0 | -6 | -8 | -5 | -3 |
| | | | $E_B$ change (%) | +5 | +5 | +2 | +5 | +6 |

Table 1 (cont'd)

| Comparative Example | | |
|---|---|---|
| 1 | 2 | 3 |
| 100 | 100 | 100 |
| – | – | A |
| – | – | 3 |
| – | X | – |
| – | 0.2 | – |
| 140 - 150 | 140 - 150 | 140 - 150 |
| 1 | 1 | 1 |
| 69 | 70 | 70 |
| 130 | 126 | 122 |
| 390 | 380 | 410 |

- cont'd -

Table 1 (cont'd)

| | | |
|---|---|---|
| 41 | 40 | 39 |
| 51 | 63 | 49 |
| 45 | 43 | 45 |
| +2 | -3 | ±0 |
| +10 | +5 | +10 |

Note: (1) ESPRENE 201 (registered trademark) manufactured by SUMITOMO CHEMICAL CO., LTD., ethylene-propylene copolymer rubber

(2) A: N,N'-bis(2-methyl-2-nitropropyl)-1,6-diaminohexane

B: N,N'-bis(2-nitropropyl)-1,4-diaminobenzene

C: N,N'-bis(2-nitro-2-methylpropyl)-1,12-diaminododecane

(3) X: dicumylperoxide

Y: dibenzothiazyl disulfide

(4) $T_B$ change (%) = [1-($T_B$ after heat aging/initial value of $T_B$)] x 100

Table 2

| | | | | Example | | | Comparative Example | | |
|---|---|---|---|---|---|---|---|---|---|
| | | | | 6 | 7 | 8 | 4 | 5 | 6 |
| First step | Com-pounding recipe | EPM (1) (part by weight) | | 100 | 100 | 100 | 100 | | |
| | | Dinitro-diamine | Kind (2) | A | A | A | A | | |
| | | | Part by weight | 3 | 3 | 3 | 3 | | |
| | | Dicumylperoxide (part by weight) | | 0.2 | 0.2 | 0.2 | - | | |
| | | FEF black (part by weight) | | - | 10 | 30 | 10 | | |
| | Heat treatment conditions | | Tempe-rature (°C) | 140 - 150 | 140 - 150 | 140 - 150 | 140 - 150 | | |
| | | | Time (minute) | 1 | 1 | 1 | 1 | | |
| Second step | Com-pounding recipe | EPM (1) (part by weight) | | - | - | - | - | 100 | 100 |
| | | FEF black (part by weight) | | 70 | 60 | 40 | 60 | 70 | 70 |

- cont'd -

Table 2 (cont'd)

| | | | | | | | | | |
|---|---|---|---|---|---|---|---|---|---|
| | | Dinitro-diamine | Kind (2) | | | | | | A |
| | | | Part by weight | | | | | | 3 |
| Result of evaluation | Compound viscosity ($ML_{1+4}$ 100°C) | | | 66 | 67 | 71 | 66 | 64 | 65 |
| | Properties of vulcanizate | Tensile strength $T_B$ ($kgf/cm^2$) | | 119 | 122 | 113 | 121 | 117 | 112 |
| | | Elongation at break $E_B$ (%) | | 430 | 410 | 380 | 420 | 440 | 430 |
| | | Durability (Number of replications of extension and compression until fatigue failure) ±35% (x 10,000) | | 185 | 196 | 158 | 52 | 57 | 37 |
| | | Heat resistance 150°C | Compression set (%) | 39 | 40 | 41 | 41 | 40 | 40 |
| | | | $T_B$ change (%) | -4 | -6 | -1 | -5 | ±0 | -6 |
| | | | $E_B$ change (%) | +5 | +5 | +7 | +4 | +5 | +5 |

Table 3

| | Compounding agent (part by weight) |
|---|---|
| EPDM (5) | 100 |
| Zinc oxide | 5 |
| Stearic acid | 1 |
| FEF black | 70 |
| Processing oil (DIANA PW380) | 10 |
| ANTIGENE NBC (6) | 2 |
| SOXINOL BZ (7) | 1.5 |
| SOXINOL TT (8) | 1.0 |
| SOXINOL M (9) | 1.0 |
| Sulfur | 0.7 |

Note:
(5) ESPRENE 501A (registered trademark), manufactured by SUMITOMO CHEMICAL CO., LTD., ethylene-propylene-ethylidene norbornene terpolymer rubber
(6) Nickel dibutyldithiocarbamate, manufactured by SUMITOMO CHEMICAL CO., LTD.
(7) Zinc di-n-butyldithiocarbamate, manufactured by SUMITOMO CHEMICAL CO., LTD.
(8) Tetramethylthiuram disulfide, manufactured by SUMITOMO CHEMICAL CO., LTD.
(9) 2-Mercaptobenzothiazole, manufactured by SUMITOMO CHEMICAL CO., LTD.

Table 4

| | | | |
|---|---|---|---|
| Compound viscosity ($ML_{1+4}$ 100 °C) | | | 68 |
| Properties of vulcanizate | Tensile strength $T_B$ ($kgf/cm^2$) | | 160 |
| | Elongation at break $E_B$ (%) | | 510 |
| | Tear strength $Tr_B$ (kgf/cm) | | 49 |
| | Durability (Number of replications of extension and compression until fatigue failure) ±35% (x 10,000) | | 136 |
| | Heat resistance 150 °C 70 hours | Compression set (%) | 72 |
| | | $T_B$ change (%) | -22 |
| | | $E_B$ change (%) | -53 |

## Claims

1. A process for producing a rubber composition comprising the first step of heat-treating at 120 °C or more a mixture comprising 100 parts by weight of an ethylene-α-olefin copolymer rubber, 0.5-5 parts by weight of at least one dinitrodiamine represented by general formula (1):

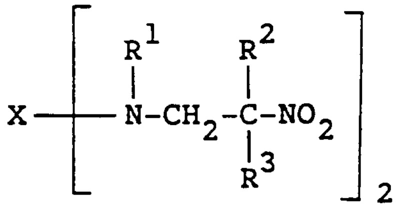

(1)

wherein X is a divalent acyclic aliphatic group, a divalent cyclic aliphatic group or a divalent aryl group which may contain halogen(s) or oxygen; $R^1$ is a hydrogen atom, an acyclic aliphatic group, a cyclic aliphatic group or an aryl group and when both X and $R^1$ are acyclic aliphatic groups, the nitrogen atoms may be linked to each other through $R^1$; $R^2$ and $R^3$ are independently hydrogen atoms or alkyl groups of 1-12 carbon atoms and $R^2$ and $R^3$ may be combined to form a ring, and at least one radical generating agent, to obtain a heat-treated mixture, the second step of adding a filler to the heat-treated mixture and kneading them to obtain a rubber mixture and the third step of compounding a crosslinking agent with the rubber mixture obtained in the second step at 100°C or less to obtain a rubber composition.

2. The process according to Claim 1 wherein in the first step, a mixture comprising 100 parts by weight of an ethylene-α-olefin copolymer rubber, 0.5-5 parts by weight of at least one dinitrodiamine represented by general formula (1), at least one radical generating agent and 30 parts by weight or less of a filler is heat-treated to obtain a heat-treated mixture.

3. The process according to Claim 2, wherein the filler used in the first step is carbon black.

4. The process according to Claim 1, wherein the ethylene-α-olefin copolymer rubber is ethylene-propylene copolymer rubber, ethylene-1-butene copolymer rubber or ethylene-1-hexene copolymer rubber.

5. The process according to Claim 1, wherein the dinitrodiamine is selected from the group consisting of the compounds represented by the following formulae wherein -Z denotes

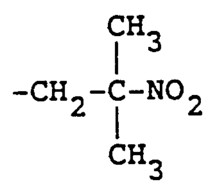 :

(1) $Z-NH-(CH_2)_2-NH-Z$

(2) $Z-NH-(CH_2)_3-NH-Z$

(3) $Z-NH-(CH_2)_4-NH-Z$

(4) $Z-NH-(CH_2)_6-NH-Z$

(5) $Z-NH-(CH_2)_{10}-NH-Z$

(6) $Z-NH-(CH_2)_{12}-NH-Z$

(7) 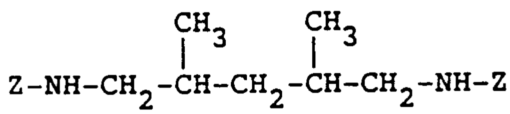

(8) $NO_2-(CH_2)_2-NH-(CH_2)_2-NH-(CH_2)_2-NO_2$

(9) $NO_2-(CH_2)_2-NH-(CH_2)_6-NH-(CH_2)_2-NO_2$

(10) 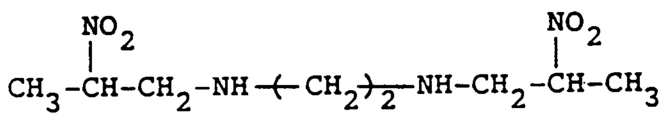

(11) 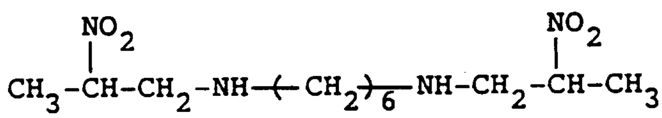

(12) 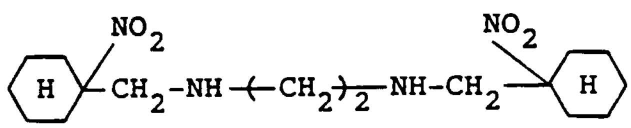

(13) 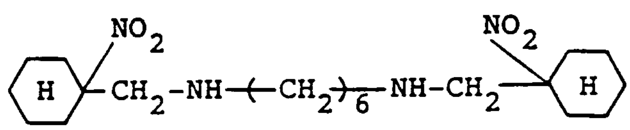

(14) 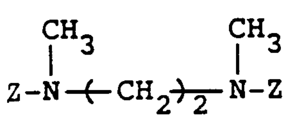

(15) 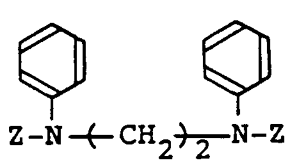

(16) 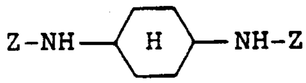

(17) 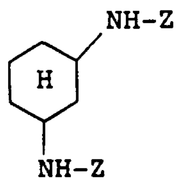

(18) 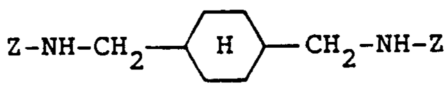

(19) 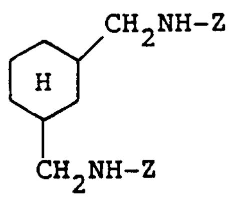

(20) 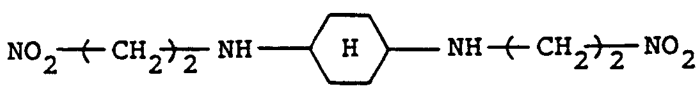

(21) 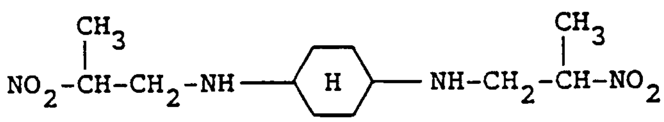

(22) 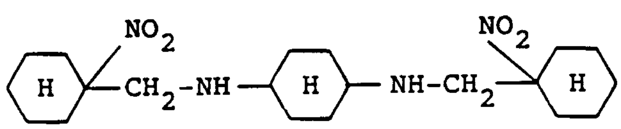

(23) 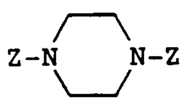

(24) 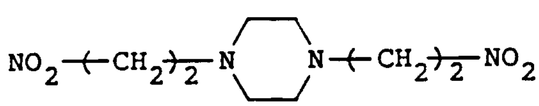

(25) 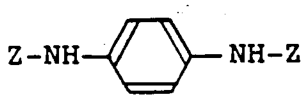

(26) 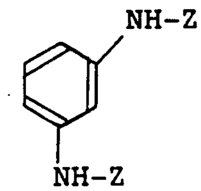

(27) 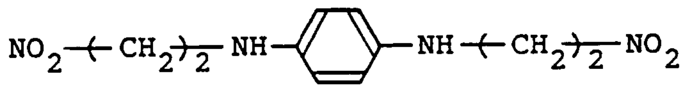

(28) 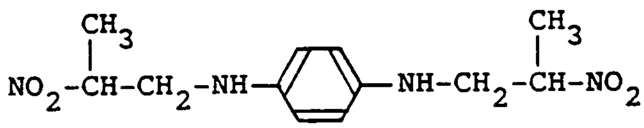

(29) 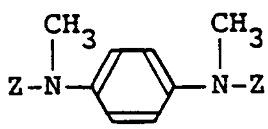

(30) 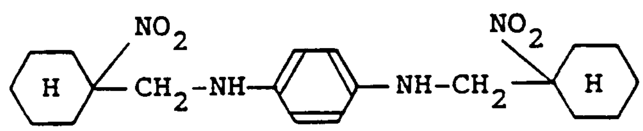

(31) 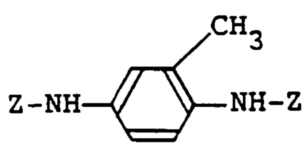

(32) 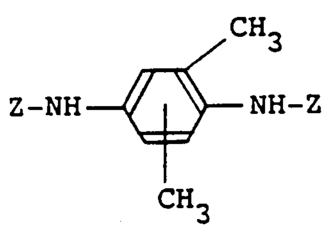

(33) 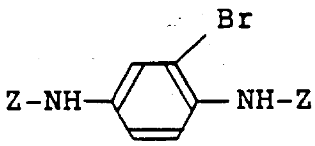

(34) 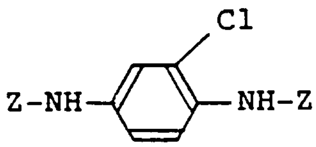

(35) 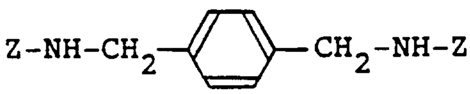

(36) 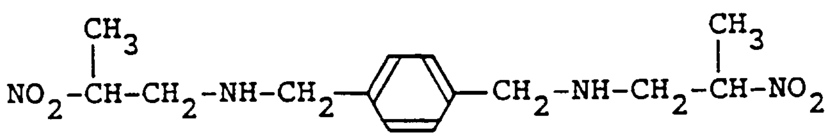

(37) 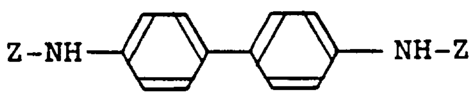

(38) 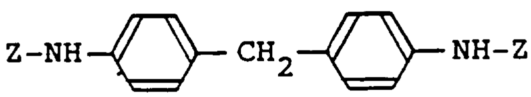

(39) 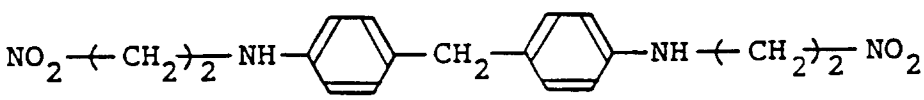

(40) 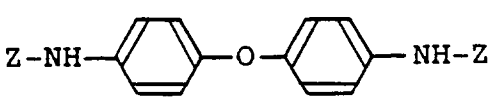

(41) 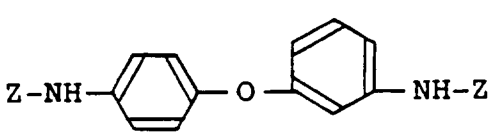

(42) 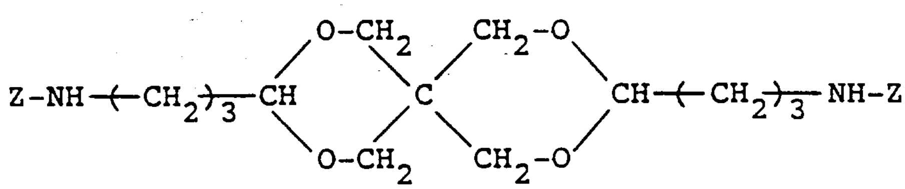

(43) 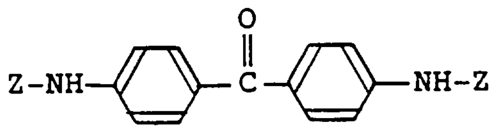

(44) 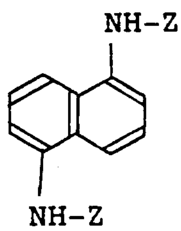

(45) 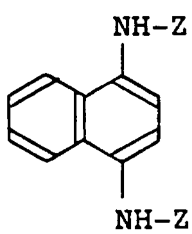

(46) 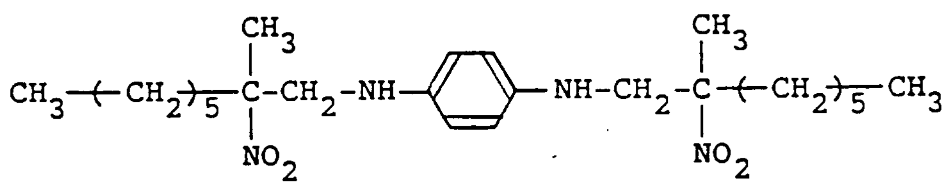

(47) 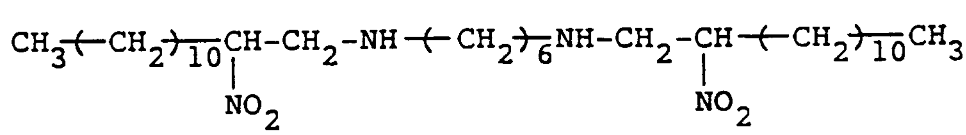

and

(48) 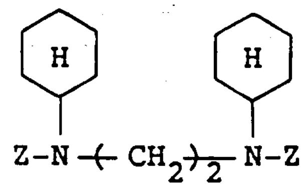 .

6. The process according to Claim 1, wherein the radical generating agent is 2,2'-dinitrobisbenzothiazole or an organic peroxide.

7. The process according to Claim 1, wherein the amount of the radical agent used is 0.1-3 parts by weight per 100 parts by weight of the ethylene-α-olefin copolymer rubber.

8. The process according to Claim 1, wherein in the second step the filler is carbon black.

9. The process according to Claim 1, wherein the heat treatment in the first step was conducted at 120-220 °C for 1-40 minutes.

10. Use of a rubber composition obtained according to any one of claims 1 to 9 as a highly durable and heat resistant rubber in industrial products.

**Patentansprüche**

1. Verfahren zur Herstellung einer Kautschukzusammensetzung, umfassend den ersten Schritt der Wärmebehandlung bei 120 °C oder mehr eines Gemischs, das umfaßt: 100 Gew.-Teile eines Ethylen-α-Olefin-Copolymerkautschuks, 0,5-5 Gew.-Teile mindestens eines Dinitrodiamins der allgemeinen Formel (1):

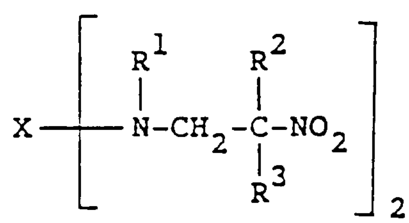 (1)

in der X ein zweiwertiger acyclischer aliphatischer Rest, ein zweiwertiger cyclischer aliphatischer Rest oder ein zweiwertiger Arylrest ist, der (ein) Halogenatom(e) oder ein Sauerstoffatom enthalten kann; $R_1$ ein Wasserstoffatom, ein acyclischer aliphatischer Rest, ein cyclischer aliphatischer Rest oder ein Arylrest ist, und wenn sowohl X als auch $R^1$ acyclische aliphatische Reste sind, können die Stickstoffatome miteinander durch $R^1$ verbunden werden; $R^2$ und $R^3$ unabhängig voneinander Wasserstoffatome oder Alkylreste mit 1-12 Kohlenstoffatomen sind, und $R^2$ und $R^3$ miteinander kombiniert werden können, wobei ein Ring gebildet wird,
und mindestens einen Radikalbildner zur Gewinnung eines wärmebehandelten Gemischs,
den zweiten Schritt der Zugabe eines Füllstoffs zu dem wärmebehandelten Gemisch und Kneten zur Gewinnung eines Kautschkgemischs und den dritten Schritt des Mischens eines Vernetzungsmittels mit dem in der zweiten Stufe bei 100 °C oder weniger erhaltenen Kautschukgemisch zur Gewinnung einer Kautschukzusammensetzung.

2. Verfahren gemäß Anspruch 1, in dem im ersten Schritt ein Gemisch, das 100 Gew. -Teile eines Ethylen-α-Olefin-Copolymerkautschuks, 0,5-5 Gew.-Teile mindestens eines durch die allgemeine Formel (1) dargestellten Dinitrodiamins, mindestens einen Radikalbildner und 30 Gew.-Teile oder weniger eines Füllstoffs umfaßt, zur Gewinnung eines wärmebehandelten Gemischs wärmebehandelt wird.

3. Verfahren gemäß Anspruch 2, in dem der im ersten Schritt verwendete Füllstoff Ruß ist.

4. Verfahren gemäß Anspruch 1, in dem der Ethylen-α-Olefin-Copolymerkautschuk ein Ethylen-Propylen-Copolymerkautschuk, ein Ethylen-1-Buten-Copolymerkautschuk oder ein Ethylen-1-Hexen-Copolymerkautschuk ist.

5. Verfahren gemäß Anspruch 1, in dem das Dinitrodiamin aus der Gruppe ausgewählt wird, die aus den durch die folgenden Formeln dargestellten Verbindungen besteht, in denen -Z

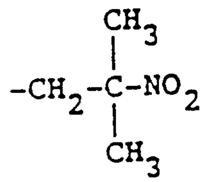

bedeutet:

(1) $Z-NH-(CH_2)_2-NH-Z$

(2) $Z-NH-(CH_2)_3-NH-Z$

(3) $Z-NH-(CH_2)_4-NH-Z$

(4) $Z-NH-(CH_2)_6-NH-Z$

(5) $Z-NH-(CH_2)_{10}-NH-Z$

(6) $Z-NH-(CH_2)_{12}-NH-Z$

(7) 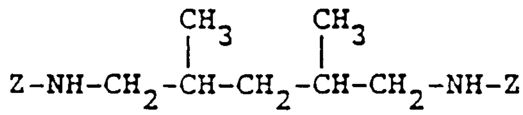

(8) $NO_2-(CH_2)_2-NH-(CH_2)_2-NH-(CH_2)_2-NO_2$

(9) $NO_2-(CH_2)_2-NH-(CH_2)_6-NH-(CH_2)_2-NO_2$

(10) 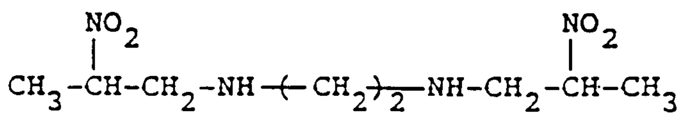

(11) 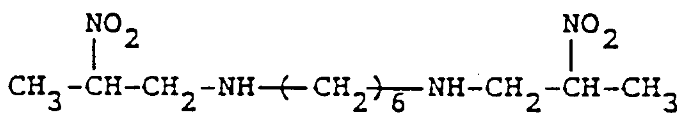

(12) 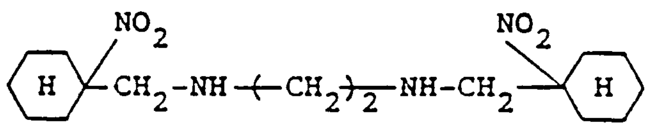

(13) 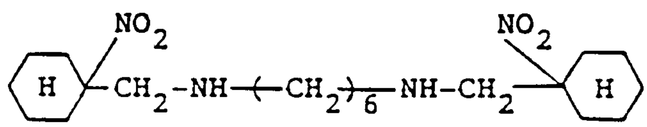

(14) 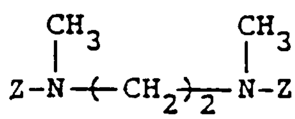

(15) 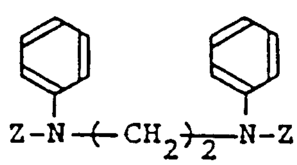

(16) 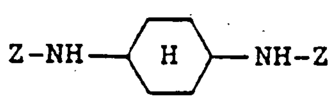

(17) 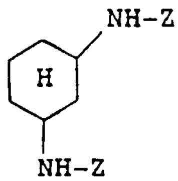

(18) 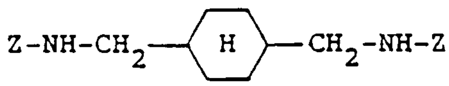

(19) 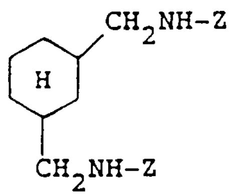

(20) 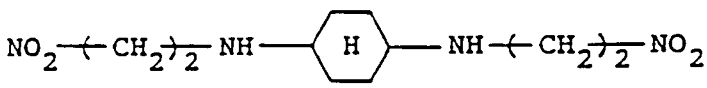

(21) 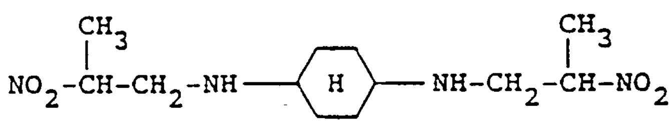

(22) 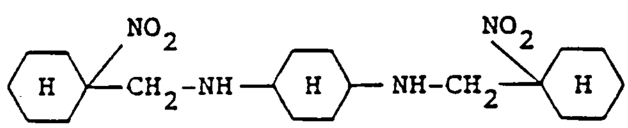

(23) 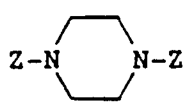

(24) 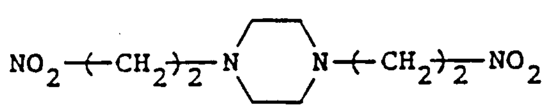

(25) 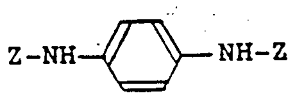

(26) 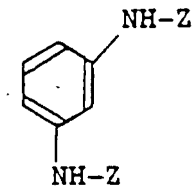

(27) 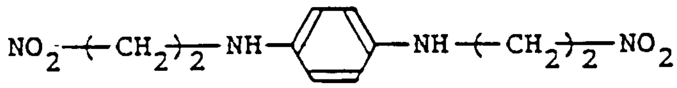

(28) 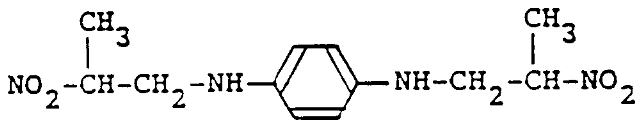

(29) 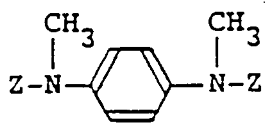

(30) 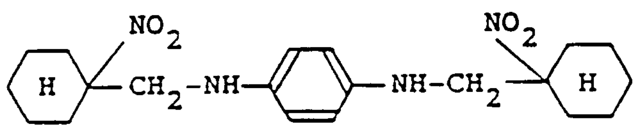

(31) 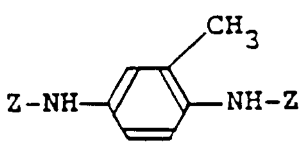

(32) 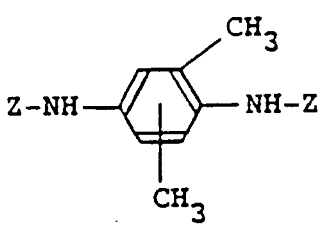

(33) 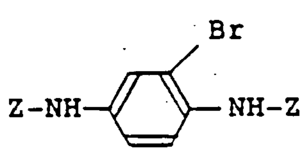

(34) 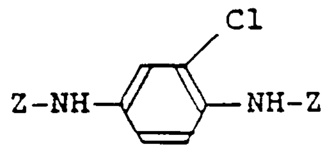

(35) 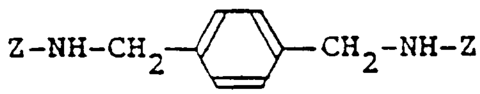

(36) 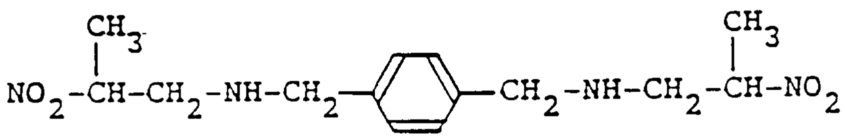

(37) 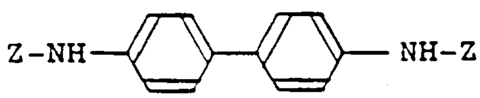

(38) 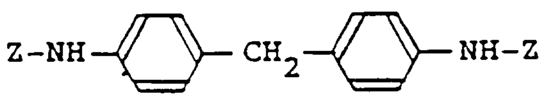

(39) 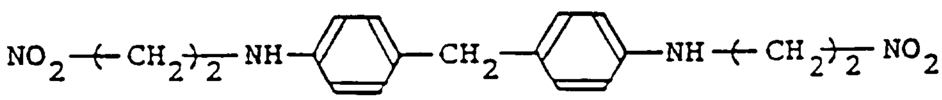

(40) 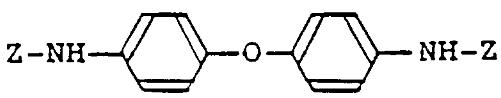

(41) 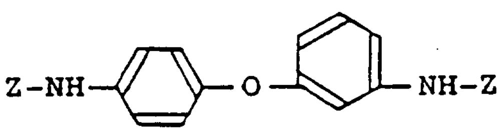

(42) 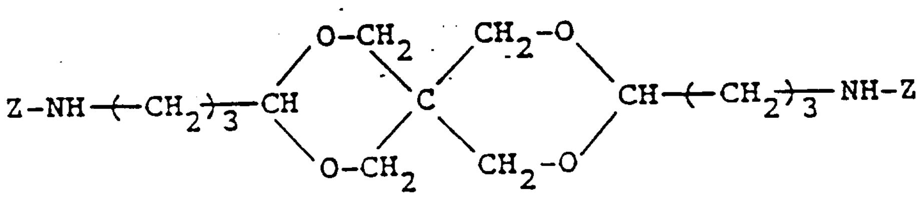

(43) 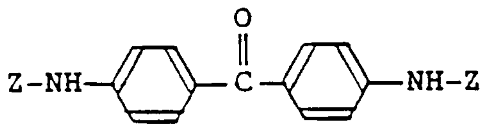

(44) 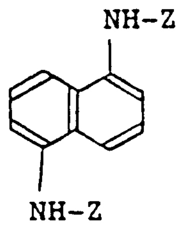

(45) 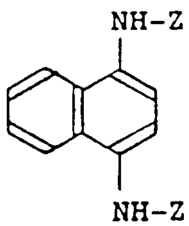

(46) 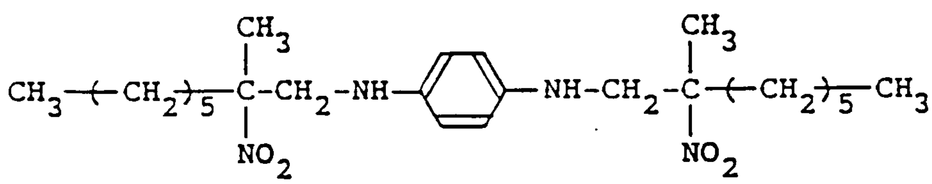

(47) 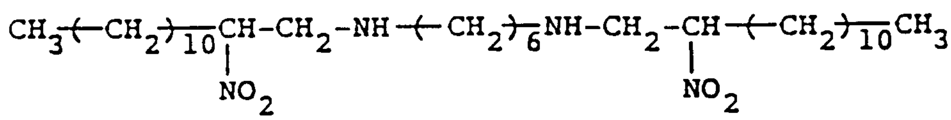

und

(48) 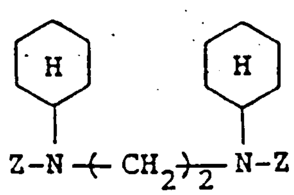

**6.** Verfahren gemäß Anspruch 1, in dem der Radikalbildner 2,2'-Dinitrobisbenzothiazoloder ein organisches Peroxid ist.

7. Verfahren gemäß Anspruch 1, in dem die verwendete Menge des Radikalbildners 0,1-3 Gew.-Teile pro 100 Gew.-Teile des Ethylen-α-Olefin-Copolymerkautschuks beträgt.

8. Verfahren gemäß Anspruch 1, in dem der Füllstoff im zweiten Schritt Ruß ist.

9. Verfahren gemäß Anspruch 1, in dem die Wärmebehandlung im ersten Schritt 1-40 min bei 120 °C-220 °C durchgeführt wurde.

10. Verwendung einer Kautschukzusammensetzung, die gemäß einem der Ansprüche 1 bis 9 erhalten wird, als ein in hohem Grade haltbarer und wärmebeständiger Kautschuk in industriellen Produkten.

**Revendications**

1. Procédé de production d'une composition de caoutchouc, comprenant une première étape de traitement thermique à 120 °C ou plus d'un mélange contenant 100 parties en poids d'un caoutchouc copolymère éthylène/α-oléfine, 0,5-5 parties en Poids d'au moins une dinitrodiamine représentée par la formule générale (1):

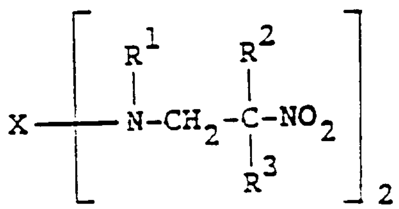

(1)

dans laquelle X est un groupement aliphatique acyclique divalent, un groupement aliphatique cyclique divalent ou un groupement aryle divalent qui peut contenir un ou des atomes d'halogène ou de l'oxygène; $R^1$ est un atome d'hydrogène, un groupement aliphatique acyclique, un groupement aliphatique cyclique ou un groupement aryle et, lorsque X et $R^1$ sont tous deux des groupements aliphatiques acycliques, les atomes d'azote peuvent être reliés l'un à l'autre par $R^1$; $R^2$ et $R^3$ sont indépendamment des atomes d'hydrogène, ou des groupements alkyle de 1 à 12 atomes de carbone et $R^2$ et $R^3$ peuvent être combinés pour former un cycle, et au coins un agent de formation de radicaux, pour obtenir un mélange traité thermiquement; une deuxième étape d'addition d'une charge au mélange traité thermiquement et de leur pétrissage pour obtenir un mélange de caoutchouc; et une troisième étape d'introduction d'un agent de réticulation dans le mélange de caoutchouc obtenu dans la deuxième étape, à 100 °C ou moins pour obtenir une composition de caoutchouc.

2. Procédé selon la revendication 1, dans lequel, dans la première étape, on traite thermiquement, pour obtenir un mélange traité thermiquement, un mélange comprenant 100 parties en poids d'un caoutchouc copolymère éthylène/α-oléfine, 0,5-5 parties en poids d'au moins une dinitrodiamine représentée par la formule générale (1), au moins un agent de formation de radicaux et 30 parties en poids ou moins d'une charge.

3. Procédé selon la revendication 2, dans lequel la charge utilisée dans la première étape est le noir de charbon.

4. Procédé selon la revendication 1, dans lequel le caoutchouc copolymère éthylène/α-oléfine est le caoutchouc copolymère éthylène/propylène, le caoutchouc copolymère éthylène/1-butène ou le caoutchouc copolymère éthylène/1-hexène.

5. Procédé selon la revendication 1, dans lequel la dinitrodiamine est choisie dans le groupe constitué des composés représentés par les formules suivantes dans lesquelles-Z désigne

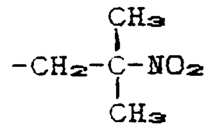

(1) $Z{-}NH{-}(CH_2)_2{-}NH{-}Z$

(2) $Z{-}NH{-}(CH_2)_3{-}NH{-}Z$

(3) $Z{-}NH{-}(CH_2)_4{-}NH{-}Z$

(4) $Z{-}NH{-}(CH_2)_6{-}NH{-}Z$

(5) $Z-NH-(CH_2)_{10}-NH-Z$

(6) $Z-NH-(CH_2)_{12}-NH-Z$

(7) 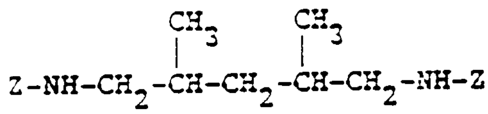

(8) $NO_2-(CH_2)_2-NH-(CH_2)_2-NH-(CH_2)_2-NO_2$

(9) $NO_2-(CH_2)_2-NH-(CH_2)_6-NH-(CH_2)_2-NO_2$

(10) 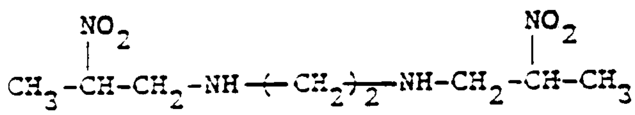

(11) 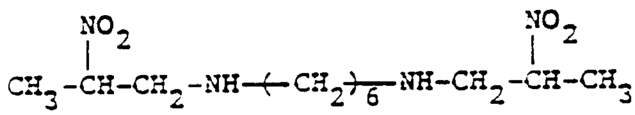

(12) 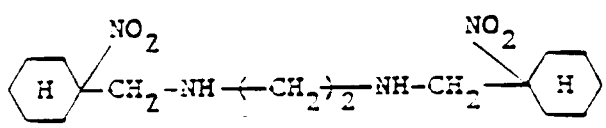

(13) 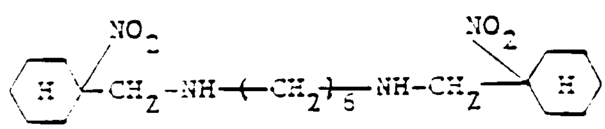

(14) 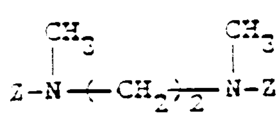

(15) 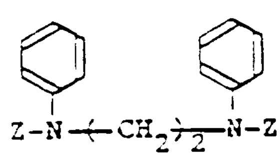

(16) 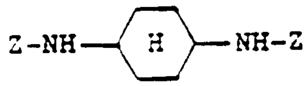

(17) 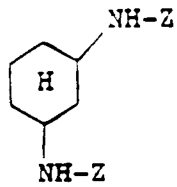

(18) 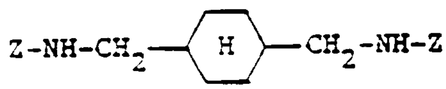

(19) 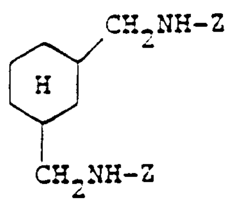

(20) 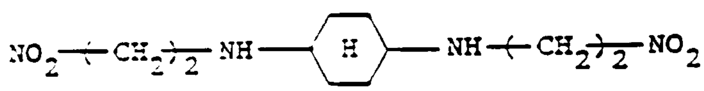

(21) 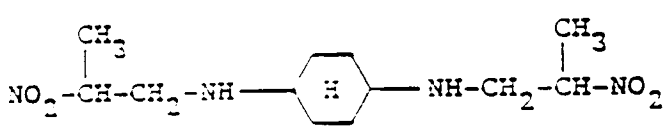

(22) 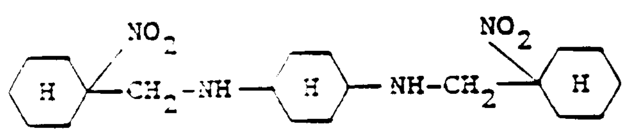

(23) 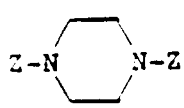

(24) 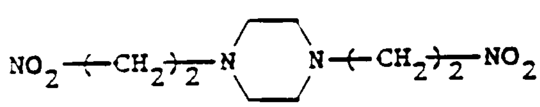

(25) 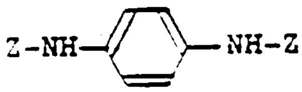

(26) 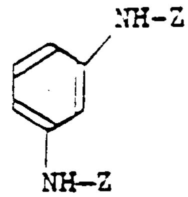

(27) 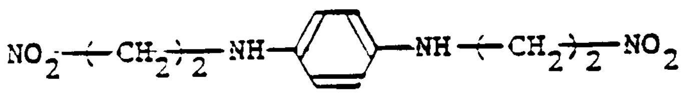

(28) 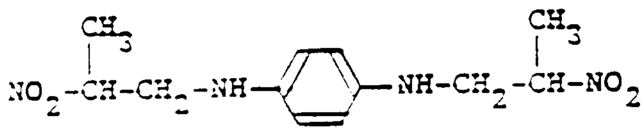

(29) 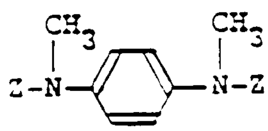

(30) 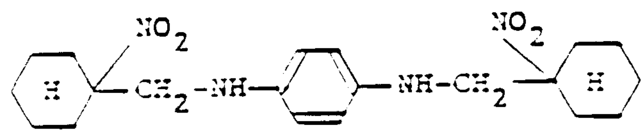

(31) 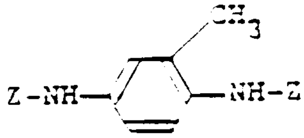

(32) 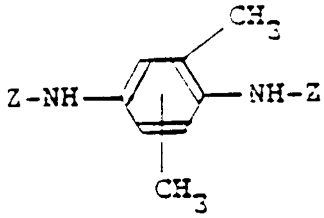

(33) 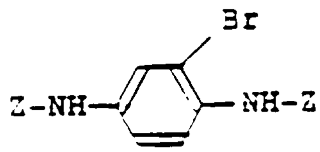

(34) 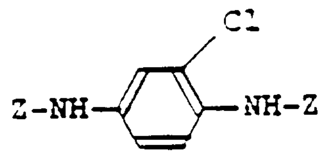

(35) 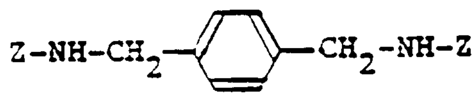

(36) 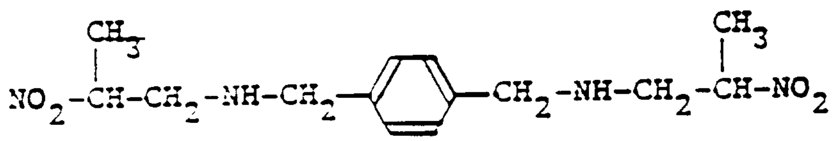

(37) 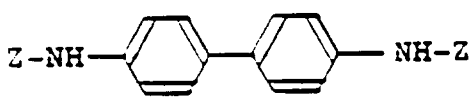

(38) 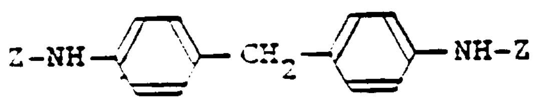

(39) 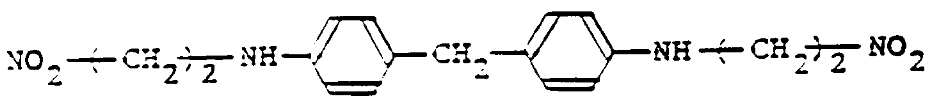

(40) 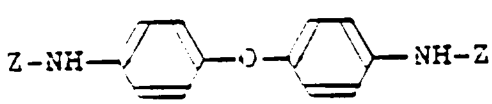

(41) 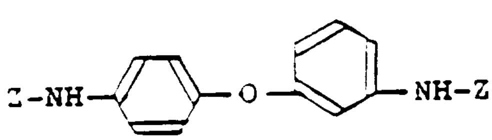

(42) 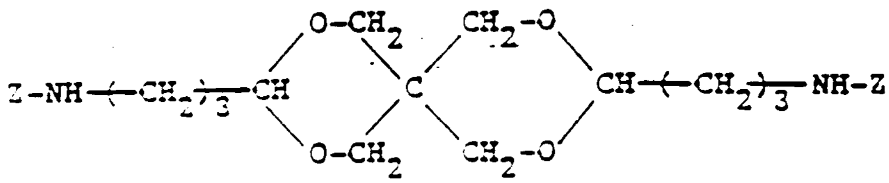

(43) 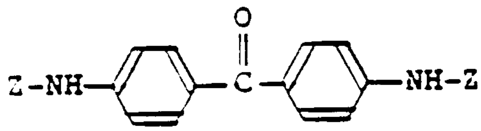

(44) 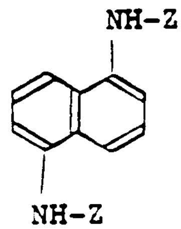

(45) 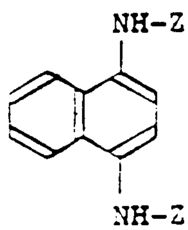

(46) 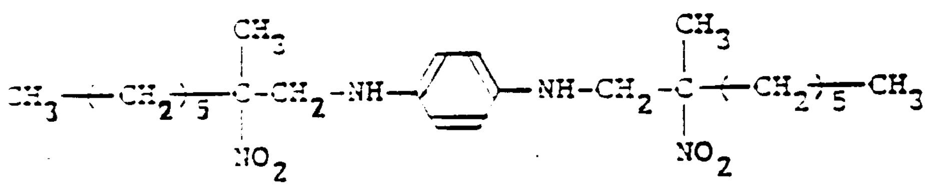

(47) 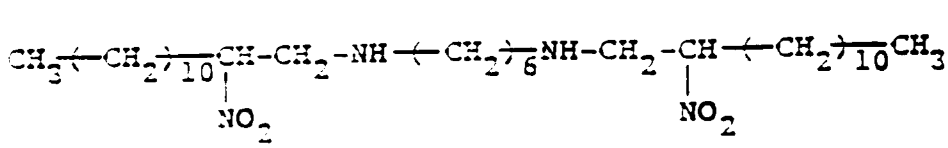

et

(48) 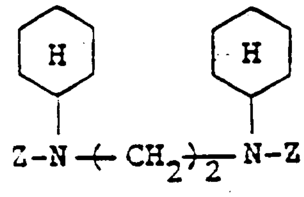 .

6. Procédé selon la revendication 1, dans lequel l'agent de formation de radicaux est le 2,2'-dinitrobis-benzothiazole ou un peroxyde organique.

7. Procédé selon la revendication 1, dans laquelle la quantité utilisée d'agent formateur de radicaux est de 0,1-3 parties en poids pour 100 parties en poids du caoutchouc copolymère éthylène/$\alpha$-oléfine.

8. Procédé selon la revendication 1, dans lequel, dans la deuxième étape, la charge est le noir de charbon.

9. Procédé selon la revendication 1, dans lequel le traitement thermique de la première étape est effectué à 120-220 °C pendant 1-40 minutes.

10. Utilisation d'une composition de caoutchouc obtenue selon l'une quelconque des revendications 1 à 9 en tant que caoutchouc très durable et résistant à la chaleur dans des produits industriels.